# FASCICULE DE BREVET EUROPEEN

(11) **EP 2 949 677 B1**
(45) Date de publication et mention de la délivrance du brevet: **08.03.2023**
(21) Numéro de dépôt: 15168467.7
(22) Date de dépôt: 20.05.2015
(51) Int. Cl.: C08G 18/48, C08G 18/76, C09J 175/08, C08G 18/10, C08G 18/30

(54) **COMPOSITION DE POLYURÉTHANE À TERMINAISONS NCO À BASE DE 2,4-TDI NON THERMOFUSIBLE ET À FAIBLE TENEUR EN MONOMÈRE TDI, COMPRENANT AU MOINS UN COMPOSÉ ISOCYANATE DE VOLUME MOLAIRE PARTICULIER**
POLYURETHANZUSAMMENSETZUNG MIT NCO-ENDEN AUF DER BASIS VON NICHT HEISSSCHMELZBAREM 2,4-TDI UND GERINGEM GEHALT AN TDI-MONOMER, DIE MINDESTENS EINE ISOCYANAT-VERBINDUNG MIT SPEZIFISCHEM MOLVOLUMEN ENTHÄLT
NON-HOT-MELT 2,4-TDI-BASED POLYURETHANE COMPOSITION BEARING NCO END GROUPS AND HAVING A LOW CONTENT OF TDI MONOMER, COMPRISING AT LEAST ONE ISOCYANATE COMPOUND OF PARTICULAR MOLAR VOLUME

(30) Priorité: 28.05.2014 FR 1454823
(43) Date de publication de la demande: 02.12.2015
(73) Titulaire: BOSTIK SA, 92700 Colombes (FR)
(72) Inventeur: Sanz, Federico, 60750 Choisy Au Bac (FR); Michaud, Guillaume, 60200 Compiegne (FR)
(74) Mandataire: Arkema Patent

(56) Documents cités:
- EP-A2- 0 300 388
- WO-A1-2005/097861
- WO-A1-2011/051019
- DE-A1-102008 025 793
- US-A1- 2007 129 525
- US-B1- 6 515 164

## Description

La présente invention concerne une composition de polyuréthane à terminaisons NCO à base de 2,4-toluène diisocyanate (2,4-TDI) non thermofusible et à faible teneur en monomère TDI issu de la synthèse dudit polyuréthane, comprenant au moins un composé isocyanate de volume molaire particulier tel que décrit ultérieurement (noté composé (A)).

Grâce à la présence dudit composé (A), la composition de polyuréthane selon l'invention présente une stabilité améliorée en terme de viscosité, se traduisant par une augmentation de viscosité réduite dans le temps.

La présente invention concerne également l'utilisation d'une telle composition de polyuréthane comme composition adhésive stable dans le temps en terme de viscosité.

La présente invention concerne également l'utilisation d'une telle composition de polyuréthane pour fabriquer une composition adhésive, stable dans le temps en terme de viscosité.

La présente invention concerne en outre un procédé de préparation de telles compositions selon l'invention stables dans le temps en terme de viscosité, caractérisé en ce que le composé (A) (ou l'ensemble des composés (A)) est ajouté en post-synthèse du (des) polyuréthane(s) à terminaisons NCO à base de 2,4-toluène diisocyanate (2,4-TDI) non thermofusible(s) dans une composition à faible teneur en monomère TDI comprenant le(s)dit(s) polyuréthane(s).

Pour répondre au besoin du plus grand nombre, on cherche à mettre au point des compositions adhésives utilisables ou applicables à basse température (entre 5 et 35°C) et notamment à température ambiante (23°C).

De nombreuses compositions d'adhésif disponibles sur le marché sont fabriquées à partir de polyuréthanes réactifs à base de TDI, possédant notamment des groupes isocyanates terminaux qui réticulent en présence d'humidité.

Toutefois, ces compositions présentent en général l'inconvénient de comporter des teneurs importantes en TDI provenant de la réaction de synthèse du polyuréthane, susceptibles de conduire à un certain nombre d'inconvénients, dont entre autre des problèmes de toxicité.

La préparation de polyuréthanes à terminaisons NCO à base de TDI se fait traditionnellement par réaction d'un polyol avec un excès stoechiométrique de TDI. Cet excès stoechiométrique peut être traduit par un rapport molaire NCO/OH (noté « rapport NCO/OH ») strictement supérieur à 1, qui correspond au rapport molaire du nombre de groupes isocyanates (NCO) sur le nombre de groupes hydroxyles (OH) portés par les espèces réactives porteuses de telles fonctions, utilisées dans la préparation du polyuréthane. Ledit excès stoechiométrique est nécessaire à l'obtention de groupes isocyanate terminaux sur le polyuréthane. Selon le rapport molaire NCO/OH choisi, le polyuréthane synthétisé est obtenu avec un excédent plus ou moins important de monomère TDI résiduel, correspondant au monomère TDI non réagi en fin de réaction.

Afin de réduire les inconvénients liés à la présence d'une teneur élevée en TDI, des recherches ont été menées pour synthétiser des polyuréthanes à terminaisons NCO à base de TDI avec un minimum de monomère TDI résiduel.

Cependant, il a été observé que les compositions de polyuréthane possédant une teneur en monomère TDI inférieure à 0,1% en poids par rapport au poids de la composition de polyuréthane, sont hautement visqueuses à température ambiante et présentent des problèmes de stabilité dans le temps en terme de viscosité.

En effet, ces compositions de polyuréthane à faible teneur en monomère TDI ont une durée de vie limitée au stockage et voient leur viscosité augmenter rapidement au cours du temps, jusqu'à devenir trop visqueuses pour pouvoir être formulées sous la forme d'une composition adhésive utilisable ou applicable à basse température (5-35°C), et notamment à température ambiante (23°C).

Il est connu d'utiliser des diluants tel que des solvants organiques hydrocarbonés ou des plastifiants pour diminuer la viscosité de compositions de polyuréthane à terminaisons NCO à faible teneur en monomère diisocyanate résiduel. Toutefois, ces diluants présentent l'inconvénient de devoir être utilisés dans des quantités importantes, ce qui n'est généralement pas souhaité. En outre, ces diluants ne permettent pas de stabiliser efficacement l'évolution de viscosité de telles compositions de polyuréthane, notamment sur le long terme.

Les exemples 1 et 2 de EP0300388 décrivent une composition de polyuréthane comprenant un polyuréthane à terminaisons NCO à base de 2,4-TDI auquel on ajoute du MDI.

US6515164 décrit la préparation d'un prépolymère de polyuréthane comprenant des groupes NCO obtenu à partir d'au moins deux types de diisocyanates de réactivité différentes et avec une teneur en monomère diisocyanate non réagi faible.

DE102008025793 décrit des compositions adhésives et de mastic monocomposant comprenant (A) au moins un prépolymère de polyuréthane à terminaisons NCO, préparé essentiellement à partir de TDI ou MDI, avec un taux de NCO inférieur à 20%, (B) au moins un polyisocyanate ayant au moins deux fonctions isocyanate et un taux de NCO supérieur à 10%, et une teneur en monomères diisocyanates inférieure à 0,1% en poids.

WO 2005/097861 décrit la préparation d'un prépolymère de polyuréthane à base de 2,4'-MDI et/ou 2,4-TDI comprenant des groupes NCO, avec une teneur en monomère MDI/TDI non réagi faible, et de faible viscosité pour une mise en oeuvre aisée.

Alternativement, il a été proposé dans la demande de brevet WO 2011/051019, d'ajouter un ester d'acide monocarboxylique ou dicarboxylique en C₂-C₂₄ pour diminuer la viscosité d'une composition de polyuréthane à terminaisons NCO à faible teneur en monomère diisocyanate résiduel. Dans les exemples, il a été démontré qu'en ajoutant 5 à 6% en poids d'un ester particulier dans une composition de polyuréthane à terminaisons NCO à base de 2,4-TDI à faible teneur en monomère TDI résiduel, la viscosité de la composition n'évoluait plus ou quasiment plus dans le temps au bout d'une semaine à 40°C.

Toutefois, l'efficacité de cette stabilisation reste à améliorer, notamment au vu des quantités d'agent stabilisant utilisées et/ou de la durée de stabilisation.

Ainsi, il existe un besoin de mettre à disposition une composition de polyuréthane à terminaisons NCO à base de 2,4-TDI, présentant une teneur en TDI inférieure à 0,1% en poids par rapport au poids de la composition de polyuréthane, ne présentant pas tout ou partie des inconvénients de l'art antérieur.

En particulier, il existe un besoin de mettre à disposition une composition de polyuréthane à terminaisons NCO à base de 2,4-TDI, présentant une teneur en TDI inférieure à 0,1% en poids par rapport au poids de la composition de polyuréthane pouvant être stabilisée en terme de viscosité de manière plus efficace, notamment à l'aide d'une teneur totale en agent stabilisant plus faible au regard de l'art antérieur.

Il existe également un besoin de mettre à disposition une composition de polyuréthane à terminaisons NCO à base de 2,4-TDIprésentant une teneur en TDI inférieure à 0,1% en poids par rapport au poids de ladite composition, utilisable à basse température (5-35°C), et notamment à température ambiante (23°C), et suffisamment stable dans le temps en terme de viscosité sur de longues durées de stockage. En particulier, on estime qu'une telle composition est stable dans le temps en terme de viscosité lorsque sa viscosité, mesurée à 23°C, après 90 jours de stockage de la composition à 23°C dans des conditions anhydres, n'excède pas cinq fois la valeur de la viscosité mesurée dans les mêmes conditions juste après la fin de la réaction de synthèse dudit polyuréthane à faible teneur en TDI.

Il existe en outre un besoin de contrôler l'évolution de viscosité d'une composition de polyuréthane à terminaisons NCO à base de 2,4-TDI présentant une teneur en TDI inférieure à 0,1% en poids par rapport au poids de ladite composition, sans dégrader une ou plusieurs de ses propriétés intrinsèques (notamment élasticité et module) .

Par ailleurs, il existe un besoin de formuler une composition adhésive comprenant au moins un polyuréthane à terminaisons NCO à base de 2,4-TDI et moins de 0,1% en poids de TDI par rapport au poids de ladite composition, présentant l'un ou plusieurs des avantages sus-cités.

De manière surprenante, il a été trouvé que l'ajout d'au moins un composé isocyanate de volume molaire inférieur ou égale à 300 mL/mol (composé (A)) dans une composition comprenant au moins un polyuréthane non thermofusible à base de 2,4-TDI à terminaisons NCO et une teneur en TDI inférieure à 0,1% en poids par rapport au poids de ladite composition, permettait de répondre en tout ou partie à ces besoins.

En particulier, il a été trouvé que l'ajout d'au moins un composé (A) permettait de réduire de manière efficace et satisfaisante l'augmentation de viscosité dans le temps, d'une composition de polyuréthane comprenant au moins un polyuréthane non thermofusible à base de 2,4-TDI à terminaisons NCO et une teneur en TDI inférieure à 0,1% en poids par rapport au poids de ladite composition, permettant ainsi d'obtenir des compositions suffisamment stables pour pouvoir être facilement mises en oeuvre à basse température (5-35°C) et notamment à température ambiante (23°C), même après de longues durées de stockage (jusqu'à 3-4 semaines à 23°C dans des conditions anhydres).

Par ailleurs, il a été trouvé que l'addition d'au moins un composé (A) dans une composition adhésive formulée à partir d'une composition de polyuréthane comprenant au moins un polyuréthane non thermofusible à base de 2,4-TDI à terminaisons NCO et une teneur en TDI inférieure à 0,1% en poids par rapport au poids de la composition de polyuréthane, à l'une quelconque de ses étapes de préparation, postérieure à l'addition de ladite composition de polyuréthane dans la composition adhésive, permettait d'obtenir les mêmes avantages que sus-cités.

En outre, il a été observé que l'utilisation d'une petite quantité de composé(s) (A) suffisait à obtenir une stabilisation de la viscosité d'une composition de polyuréthane comprenant au moins un polyuréthane non thermofusible à base de 2,4-TDI à terminaisons NCO et une teneur en TDI inférieure à 0,1% en poids par rapport au poids de la composition de polyuréthane, et permettait de formuler une composition adhésive, mono ou bicomposant, stables dans le temps en terme de viscosité et présentant des propriétés mécaniques, adhésives, et/ou applicatives satisfaisantes. En particulier, lesdites propriétés ne subissent pas de dégradation substantielle consécutivement à l'ajout de composé(s) (A).

La présente demande porte donc sur l'utilisation d'au moins un composé (A) comportant au moins un groupe isocyanate et possédant un volume molaire inférieur ou égale à 300 millilitres par mole (mL/mol) choisi(s) parmi ceux dont le(s) groupe(s) isocyanate n'est (ne sont) pas relié(s) à un atome de carbone d'un cycle hydrocarboné aromatique, le volume molaire étant mesuré à une température allant de 20 à 25°C et à pression atmosphérique de 1 bar, comme agent stabilisant de viscosité d'une composition de polyuréthane comprenant au moins un polyuréthane à base de 2,4-TDI à terminaisons NCO présentant une viscosité mesurée à 23°C inférieure ou égale à 150 000 mPa.s., et une teneur en TDI, issu de la synthèse dudit polyuréthane, inférieure à 0,1% en poids par rapport au poids de la composition de polyuréthane. Un tel agent stabilisant est capable à lui seul, sans avoir recours à des agents stabilisants de viscosité de l'art antérieur dans les quantités prescrites par l'art antérieur, de réduire l'augmentation de la viscosité dans le temps d'une composition de polyuréthane comprenant au moins un polyuréthane non thermofusible à base de 2,4-TDI à terminaisons NCO et une teneur en TDI inférieure à 0,1% en poids par rapport au poids de la composition de polyuréthane.

La présente demande porte également sur l'utilisation d'au moins un composé (A) comme agent stabilisant de viscosité d'une composition adhésive formulée à partir d'une composition de polyuréthane comprenant au moins un polyuréthane non thermofusible à base de 2,4-TDI à terminaisons NCO et une teneur en TDI inférieure à 0,1% en poids par rapport au poids de la composition de polyuréthane.

D'autres objets et caractéristiques de la présente invention apparaîtront plus clairement à la lecture de la description et des exemples.

Dans la présente demande, en l'absence d'indication contraire :
- la viscosité est mesurée à température ambiante (23°C). La mesure de viscosité à 23°C peut se faire à l'aide d'un viscosimètre Brookfield selon la norme ISO 2555. Typiquement, la mesure réalisée à 23°C peut se faire à l'aide d'un viscosimètre Brookfield RVT, d'une aiguille adaptée au domaine de viscosité et à une vitesse de rotation de 20 tours par minute (tr/mn) ;
- les masses molaires moyennes en en poids (Mw), exprimées en dalton (Da), sont déterminées par chromatographie par perméation de gel (GPC), la colonne étant calibrée avec des étalons de PolyEthylène Glycol (PEG).

La présente demande a pour objet en premier lieu une composition de polyuréthane comprenant :
a) au moins 98% en poids d'au moins un polyuréthane à terminaisons NCO à base de 2,4-toluène diisocyanate (2,4-TDI), présentant une viscosité mesurée à 23°C inférieure ou égale à 150 000 mPa.s,
b) une teneur en monomère TDI, issu de la synthèse dudit polyuréthane a), inférieure à 0,1% en poids,
c) au moins un composé isocyanate de volume molaire inférieur ou égal à 300 millilitres par mol (mL/mol) (noté composé (A)), choisi(s) parmi ceux dont le(s) groupe(s) isocyanate n'est (ne sont) pas relié(s) à un atome de carbone d'un cycle hydrocarboné aromatique, le volume molaire étant mesuré à une température allant de 20 à 25°C et à pression atmosphérique de 1 bar,
les pourcentages en poids étant exprimés par rapport au poids total de la composition de polyuréthane.

Le(s) polyuréthane(s) à terminaisons NCO à base de 2,4-TDI utilisé(s) selon l'invention est (sont) non thermofusible(s), c'est-à-dire qu'il(s) n'est (ne sont) pas solide(s) à une température allant de 5 à 35°C, et notamment à température ambiante (23°C). En particulier, il(s) présente(nt) une viscosité mesurée à 23°C, inférieure ou égale à 150 000 mPa.s, de préférence inférieure ou égale à 100 000 mPa.s, plus préférentiellement allant de 100 à 50 000 mPa.s., et mieux encore allant de 500 à 50 000 mPa.s (millipascal seconde). De tels polyuréthanes sont suffisamment fluides à une température allant de 5 à 35°C pour pouvoir être mis en oeuvre facilement dans cette gamme de température.

La composition de polyuréthane(s) à terminaisons NCO à base de 2,4-TDI à faible teneur en TDI, non stabilisée, pouvant être utilisée selon l'invention pour préparer une composition de polyuréthane(s), stable, selon l'invention, est susceptible d'être obtenue par une réaction de polyaddition d'une composition constituée de polyisocyanate(s) comprenant au moins du TDI à 95% en poids au moins, de préférence 98% en poids au moins, et mieux encore 99% en poids au moins de 2,4-TDI par rapport au poids de TDI, et d'une composition constituée de polyol(s), à une température inférieure à 95°C, de préférence allant de 65°C à 85°C, plus préférentiellement allant de 70°C à 80°C, dans des conditions anhydres, avec ou sans catalyseur de réaction, dans des quantités de polyisocyanate(s) et de polyol(s) conduisant à un rapport NCO/OH noté r1 allant de 1,60 à 1,90, de préférence allant de 1,65 à 1,85, et mieux encore allant de 1,65 à 1,80. Ce procédé de préparation permet de synthétiser un polyuréthane à terminaisons NCO à base de 2,4-TDI avec peu de monomère TDI résiduel. La teneur en TDI en fin de réaction est en générale inférieure à 0,1% en poids par rapport au poids du milieu réactionnel.

Les quantités pondérales des réactifs à charger dans le réacteur pour synthétiser a composition depolyuréthane(s) à terminaisons NCO à base de 2,4-TDI à faible teneur en TDI utilisée selon l'invention, sont déterminées sur la base du rapport r1, ainsi que, s'agissant des polyols, sur la base de leur masse molaire moyenne en nombre et leur fonctionnalité, ou s'agissant des polyisocyanates, sur la base de leur teneur en groupe isocyanate (%NCO, exprimé en pourcentage en poids par rapport au poids de polyisocyanate).

La composition de polyisocyanate(s) sus-citée peut être constituée de TDI seul, à 95% en poids au moins, de préférence 98% en poids au moins, et mieux encore 99% en poids au moins de 2,4-TDI par rapport au poids total de TDI, ou en mélange avec un ou plusieurs monomères polyisocyanates différents du TDI. Ces monomères polyisocyanates peuvent être choisis parmi ceux habituellement utilisés dans la synthèse d'un polyuréthane à terminaisons NCO, de préférence parmi les monomères diisocyanates autres que le TDI, et plus préférentiellement parmi le diisocyanate de diphényle méthane (MDI), l'isophorone diisocyanate (IPDI), l'hexaméthylène diisocyanate (HDI).

De préférence, la composition de polyisocyanate(s) est constituée d'un ou plusieurs isomères du TDI, et d'au moins 95% en poids, en particulier d'au moins 98% en poids, plus particulièrement d'au moins 99% en poids, et mieux encore d'au moins 99,5% en poids de 2,4-TDI par rapport au poids de la composition de polyisocyanate(s).

Les compositions de polyisocyanate(s) utilisables selon l'invention sont largement disponibles dans le commerce. A titre d'exemple, on peut citer le « Scuranate^{®} T100 » commercialisé par la société Vencorex, correspondant à un 2,4-TDI de pureté supérieure à 99% en poids.

La composition de polyol(s) sus-citée peut être constituée d'un polyol ou d'un mélange de polyols. En particulier, le(s) polyol(s) utilisable(s) peu(ven)t être choisi(s) parmi ceux possédant une masse molaire moyenne en nombre allant de 200 à 20000 g/mol, et de préférence de 400 à 18000 g/mol.

De préférence, leur fonctionnalité hydroxyle va de 2 à 4. La fonctionnalité hydroxyle est le nombre moyen de fonction hydroxyle par mole de polyol.

En particulier, le(s) polyol(s) utilisable(s) peu(ven)t être choisi(s) parmi les polyester polyols, les polyéther polyols, les polydiène polyols, et leurs mélanges.

Le(s) polyol(s) utilisable(s) peu(ven)t être choisi(s) parmi les polyols aromatiques, les polyols aliphatiques et les mélanges de ces composés.

Le(s) polyester polyol(s) utilisable(s) selon l'invention peu(ven)t être choisi(s) parmi ceux ayant une masse molaire moyenne en nombre allant de 1000 à 10 000 g/mol, de préférence de 2000 à 6000 g/mol. De préférence, leur fonctionnalité hydroxyle va de 2 à 4. A titre d'exemples, on peut citer :
- les polyesters polyols d'origine naturelle tel que l'huile de ricin ;
- les polyesters polyols résultant de la condensation :
   - d'un ou plusieurs polyols aliphatiques (linéaires, ramifiés ou cycliques) ou aromatiques tels que l'éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la N-méthyldiéthanolamine et les mélanges de ces composés, avec
   - un ou plusieurs acide polycarboxylique ou son dérivé ester ou anhydride tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que l'anhydride maléique ou phtalique, ou une lactone telle que la caprolactone.

Les polyester polyols sus-cités sont préparés de manière conventionnelle, et sont pour la plupart disponibles commercialement. Parmi les polyesters polyols utilisables, on peut citer les produits suivants de fonctionnalité hydroxyle égale à 2 :
- le TONE^{®} 0240 (disponible auprès de Union Carbide) qui est une polycaprolactone de masse molaire moyenne en nombre d'environ 2000 g/mol, et un point de fusion de 50°C environ,
- le DYNACOLL^{®} 7381 de masse molaire moyenne en nombre d'environ 3500 g/mol, et un point de fusion de 65°C environ,
- le DYNACOLL^{®} 7360 qui résulte de la condensation de l'acide adipique avec l'hexane diol, et a une masse molaire moyenne en nombre d'environ 3500 g/mol, et un point de fusion de 55°C environ,
- le DYNACOLL^{®} 7330 de masse molaire moyenne en nombre d'environ 3500 g/mol, et un point de fusion de 85°C environ,
- le DYNACOLL^{®} 7363 qui résulte également de la condensation de l'acide adipique avec l'hexane diol, et a une masse molaire moyenne en nombre d'environ 5500 g/mol, et un point de fusion de 57°C environ.

Les produits DYNACOLL^{®} cités précédemment sont commercialisés par la société EVONIK.

De préférence, on utilise comme polyester polyol une polycaprolactone, l'huile de ricin ou encore un polyester polyol résultant de la condensation de l'éthanediol, du 1,3-propanediol et/ou du 1,6-hexanediol avec l'acide adipique et/ou l'acide phtalique.

On préfère mettre en oeuvre un polyester polyol présentant un point de fusion supérieur ou égal à 55 °C, correspondant à une cristallinité marquée.

Le(s) polyéther polyol(s) utilisable(s) selon l'invention peu(ven)t être choisi(s) parmi ceux ayant une masse molaire moyenne en nombre allant de 200 à 20000 g/mol, et de préférence de 400 à 12000 g/mol.

De préférence, leur fonctionnalité hydroxyle va de 2 à 3.

Le(s) polyéther polyol(s) utilisable(s) selon l'invention est (sont) de préférence choisi(s) parmi les polyoxyalkylène-polyol, dont la partie alkylène, linéaire ou ramifiée, comprend de 1 à 4 atomes de carbone, de préférence de 2 à 3 atomes de carbone.

Plus préférentiellement, le(s) polyéther polyol(s) utilisable(s) selon l'invention est (sont) de préférence choisi(s) parmi les polyoxyalkylène-diols ou polyoxyalkylène triols, et mieux encore des polyoxyalkylène diols, dont la partie alkylène, linéaire ou ramifiée, comprend de 1 à 4 atomes de carbone, de préférence de 2 à 3 atomes de carbone.

A titre d'exemple de polyoxyalkylène diols ou triols utilisables selon l'invention, on peut citer :
- les polyoxypropylène diol ou triol (aussi désignés par polypropylène glycols (PPG) diol ou triol) ayant une masse molaire moyenne en nombre allant de 400 à 18 000 g/mol et de préférence allant de 400 à 4000 g/mol,
- les polyoxyéthylène diol ou triol (aussi désignés par polyéthylène glycols (PEG) diol ou triol) ayant une masse molaire moyenne en nombre allant de 400 à 18 000 g/mol et de préférence allant de 400 à 4000 g/mol,
- les copolymères de PPG/PEG diol ou triol ayant une masse molaire moyenne en nombre allant de 400 à 18 000 g/mol et de préférence allant de 400 à 4000 g/mol,
- les polytétrahydrofurane (PolyTHF) diol ou triol ayant une masse molaire moyenne en nombre allant de 250 à 4000 g/mol,
- les polytétraméthylène glycols (PTMG) ayant une masse molaire moyenne en nombre allant de 200 à 4000 g/mol,
- les polybutylène glycols (PBG) ayant une masse molaire moyenne en nombre allant de 200 à 4000 g/mol,
- et leurs mélanges.

De préférence, le(s) polyéther polyol(s) utilisable(s) est (sont) choisi(s) parmi les polyoxypropylène diols ou triols. Les polyéther polyols sus-cités sont préparés de manière conventionnelle, et sont largement disponibles dans le commerce. Ils peuvent être obtenus par polymérisation de l'oxyde d'alkylène correspondant en présence d'un catalyseur à base d'un double complexe métal-cyanure.

A titre d'exemples de polyéther diols, on peut citer les polyoxypropylène diols commercialisés sous la dénomination « Acclaim^{®} » par la société Bayer, tels que l' « Acclaim^{®} 12200 » de masse molaire moyenne en nombre voisine de 11335 g/mol, l'« Acclaim^{®} 8200 » de masse molaire moyenne en nombre voisine de 8057 g/mol, et l'« Acclaim^{®} 4200 » de masse molaire moyenne en nombre voisine de 4020 g/mol, ou encore le polyoxypropylène diol commercialisé sous la dénomination « Voranol P2000 » par la société Dow de masse molaire moyenne en nombre voisine de 2004 g/mol.

A titre d'exemples de polyéther triol, on peut citer le polyoxypropylène triol commercialisés sous la dénomination « Voranol CP3355 » par la société Dow, de masse molaire moyenne en nombre voisine de 3554 g/mol.

Le(s) polydiène polyol(s) utilisable(s) selon l'invention est (sont) choisi(s) de préférence parmi les polydiènes comportant des groupes hydroxyles terminaux, et leurs dérivés correspondants hydrogénés ou époxydés.

Plus préférentiellement, le(s) polydiène polyol(s) utilisable(s) selon l'invention est (sont) choisi(s) parmi les polybutadiènes comportant des groupes hydroxyles terminaux, éventuellement hydrogénés ou époxydés.

Mieux encore, le(s) polydiène polyol(s) utilisable(s) selon l'invention est (sont) choisi(s) parmi les homopolymères de butadiène comportant des groupes hydroxyles terminaux, éventuellement hydrogénés ou époxydés.

Par groupes hydroxyles terminaux, on entend que les groupes hydroxyles sont situés aux extrémités de la chaîne principale du polydiène polyol.

Les dérivés hydrogénés sus-cités peuvent obtenus par hydrogénation totale ou partielle des doubles liaisons d'un polydiène comportant des groupes hydroxyles terminaux, et sont donc saturé(s) ou insaturé(s).

Les dérivés époxydés sus-cités peuvent être obtenus par époxydation chémiosélective des doubles liaisons de la chaîne principale d'un polydiène comportant des groupes hydroxyles terminaux, et comportent donc au moins un groupe époxy dans sa chaîne principale.

A titre d'exemples de polybutadiène polyols, on peut citer les homopolymères de butadiène, saturé ou insaturé, comprenant des groupes hydroxyles terminaux, éventuellement époxydés, tels que commercialisés sous la dénomination poly bd^{®} ou krasol^{®} par la société Cray Valley.

De préférence, la composition de polyol(s) est constituée d'un ou plusieurs polyols choisis parmi ceux cités précédemment et leurs mélanges. En particulier, la composition de polyol(s) peut être constituée d'un ou plusieurs polyols dont au moins un polyéther polyol. Plus particulièrement, la composition de polyol(s) peut être constituée d'un ou plusieurs polyéther polyols.

La composition de polyisocyanate(s) et de la composition de polyol(s) utilisées dans le procédé de préparation du polyuréthane à terminaisons NCO à base de 2,4-TDI utilisé selon l'invention sont choisis de préférence de manière à obtenir un polyuréthane à terminaisons NCO à base de 2,4-TDI présentant notamment une viscosité mesurée à 23°C inférieure ou égale à 150 000 mPa.s.

Le(s) catalyseur(s) de réaction utilisable(s) peu(ven)t être tout catalyseur connu par l'homme du métier pour catalyser la formation de polyuréthane par réaction d'au moins un polyisocyanate et d'au moins un polyol.

Une quantité allant jusque 1% en poids de catalyseur(s) par rapport au poids de la composition de polyuréthane selon l'invention peut être utilisée. En particulier, on préfère utiliser de 0,02 à 0,5% en poids de catalyseur(s) par rapport au poids de la composition de polyuréthane selon l'invention.

La teneur en polyuréthane à terminaisons NCO à base de 2,4-TDI est de préférence d'au moins 99% en poids du poids total de la composition de polyuréthane selon l'invention.

La teneur en monomère TDI dans la composition de polyuréthane selon l'invention est inférieure à 0,1% en poids du poids total de la composition de polyuréthane selon l'invention.

Le principe de la méthode d'analyse pour la détermination de la concentration en monomères diisocyanate résiduel (TDI) repose sur la réaction spécifique du groupe isocyanate NCO avec une amine (1-(2-méthoxyphényl)pipérazine ou PPZ) pour former des dérivés stables d'urée. Ces dérivés sont obtenus lors de la préparation de l'échantillon à analyser par dilution/solubilisation de cet échantillon à l'aide d'une solution d'acétonitrile à 0,02 mol/L de PPZ. Les dérivés de PZZ formés à partir des isocyanates contenus dans l'échantillon à analyser sont ensuite dosés par un système de Chromatographie Liquide Haute Performance (CLHP) à phase inversée en C18 avec un gradient de phase mobile comprenant un mélange d'eau et d'acétonitrile tamponné à l'aide d'une solution aqueuse de tétrabutylammonium bisulfate à 0,2% en poids, à un pH allant de 2 à 3, muni d'un détecteur Ultra-Violet (UV) fonctionnant à 254nm. Ces composés sont identifiés et quantifiés en comparant leur temps de rétention et leur surface de pics chromatographiques avec ceux des dérivés PPZ étalons obtenus par réaction d'un monomère diisocyanate (TDI) de nature et concentration connue.

L'échantillon à analyser peut être une composition de polyuréthane telle que décrite précédemment, avant ou après stabilisation avec le composé (A).

L'échantillon à analyser peut également être une composition adhésive selon l'invention formulée à partir d'une composition de polyuréthane selon l'invention.

Le(s) composé(s) (A) utilisé(s) selon l'invention est (sont) différent(s) du TDI. De préférence, le(s) composé(s) (A) est (sont) en outre différent(s) du (des) autres polyisocyanate(s) éventuellement utilisés pour la synthèse du polyuréthane à terminaisons NCO à base de 2,4-TDI selon l'invention.

Le(s) composé(s) (A) utilisé(s) selon l'invention possède(nt) de préférence un volume molaire inférieur ou égal à 250mL/mol, plus préférentiellement inférieur ou égal à 200 mL/mol.

Le volume molaire du composé (A) est défini comme le rapport de la masse molaire, exprimée en gramme par mole (g/mol) sur la masse volumique dudit composé (mesurée à une température allant de 20 à 25°C et à pression atmosphérique de 1 bar), exprimée en gramme par millilitre (g/mL).

Le(s) composé(s) (A) utilisé(s) selon l'invention possède(nt) de préférence une masse molaire inférieure ou égale à 300 g/mol.

Le(s) composé(s) (A) utilisé(s) selon l'invention est (sont) choisi(s) de préférence parmi les monoisocyanates et les diisocyanates.

Le(s) composé(s) (A) utilisé(s) selon l'invention peu(ven)t être utilisé(s) sous la forme d'un seul composé ou d'un mélange d'au moins deux composés. De préférence, il est utilisé sous la forme d'un seul composé.

Le(s) composé(s) (A) utilisé(s) selon l'invention peu(ven)t être aromatique(s) ou aliphatique(s), linéaire(s) ou ramifié(s), cyclique(s) ou acyclique(s), saturé(s) ou insaturé(s).

Le(s) composé(s) (A) utilisé(s) selon l'invention est (sont) choisi(s) parmi les composés isocyanates dont le(s) groupe(s) isocyanate n'est (ne sont) pas relié(s) à un atome de carbone d'un cycle hydrocarboné aromatique, par exemple à 6 chaînons, tel qu'un phényle. Ces composés présentent un risque toxicologique réduit, par rapport à ceux dont au moins un groupe isocyanate est relié à un atome de carbone d'un cycle hydrocarboné aromatique, par exemple à 6 chaînons, tel qu'un phényle. En effet, l'hydrolyse de ces derniers composés aromatiques conduit à des amines susceptibles de présenter des risques toxicologiques pour l'homme et son environnement.

En particulier, le(s) composé(s) (A) utilisé(s) selon l'invention est (sont) avantageusement choisi(s) parmi les composés isocyanates dont le(s) groupe(s) isocyanate n'est (ne sont) pas relié(s) à un atome de carbone hybridé sp2.

Parmi les composés (A) utilisables selon l'invention, on préfère utiliser seul ou en mélange :
- les monoisocyanates aliphatiques, acycliques, linéaires ou ramifiés, tels que par exemple:
   - l'hexyl isocyanate (de volume molaire égal à 145,7 mL/mol et de masse molaire égale à 127,2 g/mol)

      CH₃(CH₂)₄CH₂NCO,
   - l'octyl isocyanate (de volume molaire égal à 176,4 mL/mol et de masse molaire égale à 155,2 g/mol)

      CH₃(CH₂)₆CH₂NCO,
   - le décyl isocyanate (de volume molaire égal à 208,3 mL/mol et de masse molaire égale à 183,3 g/mol)

      CH₃(CH₂)₈CH₂NCO,
   - le dodécyl isocyanate (de volume molaire égal à 241 mL/mol et de masse molaire égale à 211,3 g/mol)

      CH₃(CH₂)₁₀CH₂NCO,
- les monoisocyanates benzyliques, c'est-à-dire comprenant dans leur structure un groupe benzyle et dont le groupe isocyanate est relié à l'atome de carbone du groupe méthyle substituant le groupe phényle, tels que par exemple :
   - le benzyl isocyanate (de volume molaire égal à 123,5 mL/mol et de masse molaire égale à 133,2 g/mol) 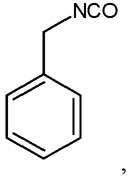
   - le alpha-méthylbenzyl isocyanate (de volume molaire égal à 140,8 mL/mol et de masse molaire égale à 147,2 g/mol) 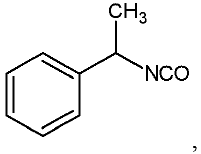
   - le 2-méthylbenzyl isocyanate, 3-méthylbenzyl isocyanate, 4-méthylbenzyl isocyanate (de volume molaire allant de 139 à 140 mL/mol et de masse molaire égale à 147,2 g/mol) 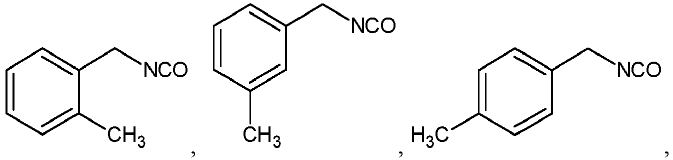
- les monoisocyanates cycloaliphatiques, notamment les formes hydrogénées des monoisocyanates aromatiques cycliques et en particulier les formes hydrogénées des monoisocyanates benzyliques, tels que par exemple :
   - la forme hydrogénée du benzyl isocyanate ou cyclohexane méthyl isocyanate (de volume molaire égal à 142,9 mL/mol et de masse molaire égale à 139,2 g/mol) 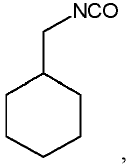
   - la forme hydrogénée de l'alpha-méthylbenzyl isocyanate (de volume molaire égal à 149,9 mL/mol et de masse molaire égale à 153,2 g/mol) 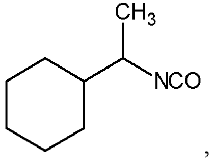
   - la forme hydrogénée des isomères du naphtyl isocyanate (HNI), tel que 1-naphtyl isocyanate hydrogéné et ses isomères (de volume molaire égal à 144 mL/mol et de masse molaire égale à 179,3 g/mol) 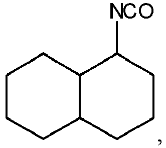
   - la forme hydrogénée des isomères du méthylbenzyl isocyanate, tel que les formes hydrogénées des 2-méthylbenzyl isocyanate, 3-méthylbenzyl isocyanate, 4-méthylbenzyl isocyanate (de volume molaire égale à 149,9 mL/mol et de masse molaire égale à 153,3 g/mol) 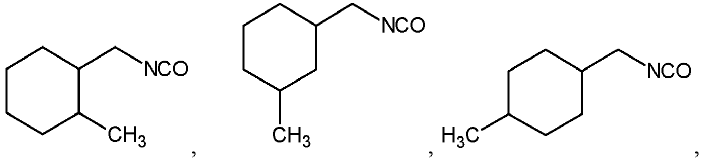
- les diisocyanates benzyliques, c'est-à-dire comprenant dans leur structure un groupe benzyle et dont au moins un des groupes isocyanate est relié à l'atome de carbone du groupe méthyle substituant le groupe phényle, tels que par exemple:
   - les isomères du xylène diisocyanate (XDI), tel que le méta-xylène diisocyanate (m-XDI) (de volume molaire égal à 157 mL/mol et de masse molaire égale à 138,2 g/mol) 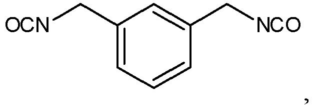
   - les isomères du tétraméthylxylène diisocyanate (TMXDI) ou bis(1-isocyanato-1-méthyléthyl)benzène, tel que le méta-tétraméthylxylène diisocyanate (m-TMXDI) (de volume molaire égal à 240 mL/mol et de masse molaire égale à 244,3 g/mol) 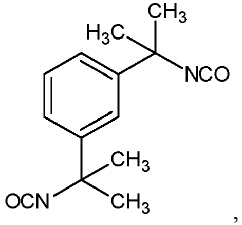
   - les isomères du méthylènebis(isocyanatométhyl phényl) tel que 1,1'-méthanediylbis[4-(isocyanatométhyl)benzène] (de volume molaire égal à 253,2 mL/mol et de masse molaire égale à 278,3 g/mol) 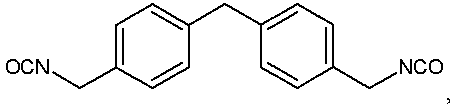
   - les isomères du bis(isocyanatométhyl)naphthalène tel que le 2,6-bis(isocyanatométhyl)naphthalène (de volume molaire égal à 204,9 mL/mol et de masse molaire égale à 238,2 g/mol) 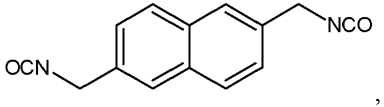
- les diisocyanates cycloaliphatiques, notamment les formes hydrogénées des diisocyanates aromatiques cycliques et en particulier les formes hydrogénées des diisocyanates benzyliques, tels que par exemple:
   - la forme hydrogénée des isomères du xylène diisocyanate (HXDI) ou bis(isocyanatométhyl)cyclohexane, tel que le méta-xylène diisocyanate hydrogéné (m-HXDI) et ses isomères (de volume molaire égal à 176 mL/mol et de masse molaire égale à 194,2 g/mol) 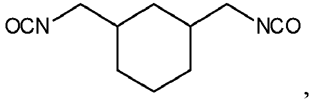
   - la forme hydrogénée des isomères du tétraméthylxylène diisocyanate (TMXDI) ou bis(1-isocyanato-1-méthyléthyl)benzène, tel que la forme hydrogénée du méta-tétraméthylxylène diisocyanate (m-TMXDI) (de volume molaire égal à 240,7 mL/mol et de masse molaire égale à 250,3 g/mol) 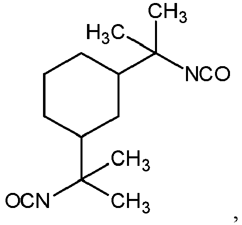
   - les isomères du méthylènebis(isocyanatométhyl cyclohexyl) tel que le 1,1'-méthanediylbis[4-(isocyanatométhyl)cyclohexane] (de volume molaire égal à 253,2 mL/mol et de masse molaire égale à 290,4 g/mol) 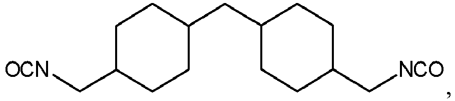
   - les isomères du bis(isocyanatométhyl) décahydronaphthalène tel que le 2,6-bis(isocyanatométhyl) décahydronaphthalène (de volume molaire égal à 204,9 mL/mol et de masse molaire égale à 248,3 g/mol) 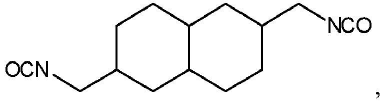
   - l'isophorone diisocyanate (IPDI) (de volume molaire égal à 246 mL/mol et de masse molaire égale à 222,3 g/mol) 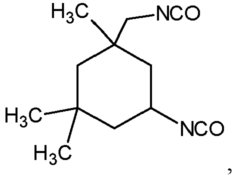
   - les formes hydrogénées des isomères du toluène diisocyanate (HTDI), telle que les formes hydrogénées du 2,4-TDI et du 2,6-TDI (de volume molaire égal à 160,2 mL/mol et de masse molaire égale à 180,2 g/mol) 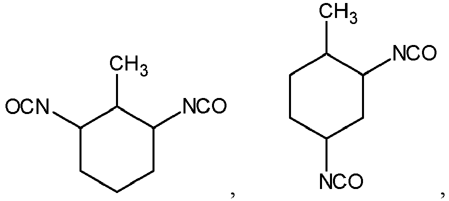
   - les isomères du cyclohexylène diisocyanate tel que le 1,4-cyclohexylène diisocyanate (de volume molaire égal à 137,3 mL/mol et de masse molaire égale à 166,2 g/mol) 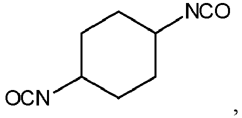
   - les formes hydrogénées des isomères du naphtalène diisocyanate (HNDI) telle que la forme hydrogénée du 1,5-HNDI (de volume molaire égal à 144 mL/mol et de masse molaire égale à 220,3 g/mol) 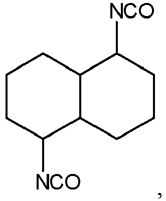
   - les formes hydrogénées des isomères du diisocyanate de diméthyl diphényle méthane telle que la forme hydrogénée du 3,3'-diméthyl-4,4'-diphenyl diisocyanate (volume molaire égal à 235 mL/mol et de masse molaire égale à 276,4 g/mol) 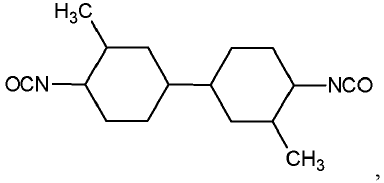
   - les formes hydrogénées des isomères du diisocyanate de diphényle méthane ou méthylènebis(cyclohexyl isocyanate) (HMDI) telle que la forme hydrogénée du 4,4'-MDI (de volume molaire égal à 212 mL/mol et de masse molaire égale à 262,3 g/mol) 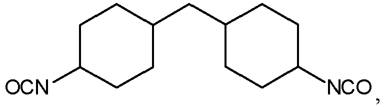
- les diisocyanates aliphatiques acycliques, linéaires ou ramifiés, tels que par exemple:
   - le 1,4-diisocyanatobutane (de volume molaire égal à 126,8 mL/mol et de masse molaire égale à 140,1 g/mol)

      OCN-(CH₂)₄-NCO,
   - l'hexaméthylène diisocyanate (HDI) ou 1,6-diisocyanatohexane (de volume molaire égal à 161,7 mL/mol et de masse molaire égale à 168,2 g/mol)

      OCN-(CH₂)₆-NCO,
   - le 1,8-diisocyanatooctane (de volume molaire égal à 194,9 mL/mol et de masse molaire égale à 196,3 g/mol)

      OCN-(CH₂)₈-NCO,
   - le 1,10-diisocyanatodecane (de volume molaire égal à 229,8 mL/mol et de masse molaire égale à 224,3 g/mol)

      OCN-(CH₂)₁₀-NCO,
   - le 1,12-diisocyanatododecane (de volume molaire égal à 268,5 mL/mol et de masse molaire égale à 252,4 g/mol)

      OCN-(CH₂)₁₂-NCO.

Lorsque le(s) composé(s) (A) est (sont) choisi(s) parmi les monoisocyanates, on préfère utiliser un ou plusieurs monoisocyanate(s) possédant un volume molaire inférieur ou égale à 150 millilitres par mole (mL/mol).

Parmi tous les composés (A) utilisables, on préfère utiliser le XDI, l'IPDI, le HMDI ou leur mélange, et plus préférentiellement le XDI.

La teneur totale en composé(s) (A) est non nulle et en général inférieure à 0,5% en poids du poids total de la composition de polyuréthane selon l'invention. De préférence, elle est inférieure ou égale à 0,3% en poids du poids total de la composition de polyuréthane selon l'invention. Avantageusement, elle est inférieure à 0,1% en poids par rapport au poids total de la composition de polyuréthane selon l'invention.

La teneur totale en composé(s) (A) est en outre de préférence supérieure ou égale à 0,01% en poids, plus préférentiellement supérieure ou égale à 0,05% en poids du poids total de la composition de polyuréthane selon l'invention. Mieux encore, la teneur en composé(s) (A) va de 0,05 à 0,3% en poids du poids total de la composition de polyuréthane selon l'invention.

La composition de polyuréthane selon l'invention telle que décrite ci-dessus, peut être utilisée en tant que telle comme composition adhésive ou être utilisée pour fabriquer une composition adhésive mono ou bicomposant.

La présente demande a ainsi pour objet en second lieu une composition adhésive comprenant au moins 50% en poids d'une composition de polyuréthane selon l'invention.

Les compositions adhésives selon l'invention présentent l'avantage d'être stables en terme de viscosité sur de longues durées de stockage et sont de fait faciles à mettre en oeuvre.

En particulier, l'ajout du ou des composé(s) (A) ne perturbe pas les propriétés mécaniques, adhésives et/ou applicatives de la composition adhésive. Avantageusement, ces propriétés ne sont pas dégradées de manière substantielle après stockage.

La composition adhésive selon l'invention peut être fabriquée à partir de la composition de polyuréthane selon l'invention par simple ajout et mélange d'un ou plusieurs ingrédients habituellement utilisés dans la préparation d'une composition adhésive.

Parmi ces ingrédients, on peut citer par exemple des catalyseurs de réticulation, des charges, des agents plastifiants, des agents de rhéologie, des résines tackifiantes, des promoteurs d'adhérence, des stabilisants UV (ou anti-oxydants), des pigments, des colorants, et les mélanges de ces ingrédients.

Ainsi, la composition adhésive selon l'invention peut comprendre au moins un catalyseur de réticulation.

A titre de catalyseur(s) de réticulation utilisable(s) dans la composition adhésive selon l'invention, on peut utiliser n'importe quel catalyseur(s) connu(s) par l'homme du métier pour catalyser la réticulation du polyuréthane à terminaisons NCO en présence d'eau (ou d'humidité). L'eau ou l'humidité peut être apportée par la surface du support ou le milieu environnant, de manière naturelle (humidité atmosphérique) ou contrôlée (par exemple, dans une chambre thermostatée à une humidité relative entre 40 et 70% à 23°C, ou un four allant jusqu'à 150°C) au contact de la composition selon l'invention. Cette réticulation se traduit par la création, entre les chaînes polymériques du polyuréthane, de liaisons de type urée qui conduisent à la formation d'un réseau polymérique tridimensionnel.

La quantité de catalyseur(s) de réticulation pouvant être utilisée est de préférence inférieure ou égale à 1% en poids du poids de la composition adhésive. Elle peut notamment varier de 0,01 à 1% en poids, plus préférentiellement de 0,05 à 0,5% en poids par rapport au poids de la composition adhésive.

La composition adhésive selon l'invention peut comprendre au moins une charge.

La (ou les) charge(s) utilisable(s) dans la composition adhésive selon l'invention peu(ven)t être choisie(s) parmi les charges minérales et les charges organiques. Ces charges se présentent sous la forme de particules de géométrie diverse. Elles peuvent être par exemples sphériques, fibreuses, ou présenter une forme irrégulière.

A titre d'exemple de charge(s) minérale(s) utilisable(s), on peut utiliser n'importe quelle(s) charge(s) minérale(s) habituellement utilisée(s) dans le domaine des compositions adhésives.

On peut utiliser par exemple de l'argile, du quartz, des charges carbonatées telles que les carbonates de métaux alcalin ou alcalino-terreux, et plus particulièrement le carbonate de calcium. Ces charges peuvent être naturelles ou traitées, par exemple à l'aide d'un acide organique tel que l'acide stéarique, ou d'un mélange d'acides organiques constitué majoritairement d'acide stéarique.

On peut utiliser également des microsphères creuses minérales telles que des microsphères creuses de verre, et plus particulièrement celles en borosilicate de sodium et de calcium ou en aluminosilicate.

A titre d'exemple de charge(s) organique(s) utilisable(s), on peut utiliser n'importe quelle(s) charge(s) organique(s) et notamment polymérique(s) habituellement utilisée(s) dans le domaine des compositions adhésives.

On peut utiliser par exemple du polychlorure de vinyle (PVC), des polyoléfines, du caoutchouc, de l'éthylène vinyl acétate (EVA), des fibres aramides telles que le Kevlar^{®}.

On peut utiliser également des microsphères creuses en polymère thermoplastique expansibles ou non expansibles. On peut notamment citer des microsphères creuses en chlorure de vinylidène/acrylonitrile.

La taille moyenne de particule de la (des) charge(s) utilisable(s) est de préférence inférieure ou égale à 10 microns, plus préférentiellement inférieure ou égale à 3 microns, afin d'éviter leur sédimentation dans la composition adhésive au cours de son stockage.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

La quantité totale de charge(s) pouvant être utilisée est de préférence inférieure ou égale à 20% en poids du poids de la composition adhésive. Elle peut notamment varier de 1 à 20% en poids par rapport au poids de la composition adhésive.

La composition adhésive selon l'invention peut comprendre au moins un agent plastifiant.

A titre d'exemple d'agent plastifiant utilisable, on peut utiliser n'importe quel agent plastifiant habituellement utilisé dans le domaine des compositions adhésives.

On peut utiliser par exemple :
- le diisodecyl phtalate (DIDP),
- un ester d'acide alkylsulphonique et de phénol, tel que commercialisé sous le nom Mesamoll^{®} par la société Lanxess,
- le diisononyl-1,2-cyclohexanedicarboxylate, tel que commercialisé sous le nom Hexamoll Dinch^{®} par la société BASF.

La quantité totale d'agent plastifiant(s) pouvant être utilisée est de préférence inférieure ou égale à 20% en poids du poids de la composition adhésive. Elle peut notamment varier de 1 à 20% en poids par rapport au poids de la composition adhésive.

La composition adhésive selon l'invention peut comprendre au moins un agent de rhéologie.

A titre d'exemple d'agent(s) de rhéologie utilisable(s), on peut citer n'importe quel agent de rhéologie habituellement utilisé dans le domaine des compositions adhésives.

De préférence, on utilise un ou plusieurs agents de rhéologie choisis parmi les agents thioxotropiques, tel que par exemple de la silice pyrogénée ou des dérivés d'urée issus de la réaction d'un monomère diisocyanate aromatique tel que le 4,4'-MDI avec une amine aliphatique telle que la butylamine. La préparation de tels dérivés d'urée est décrite notamment dans la demande FR 1 591 172.

La quantité totale d'agent(s) de rhéologie pouvant être utilisée est de préférence inférieure ou égale à 10% en poids du poids de la composition adhésive. Elle peut notamment varier de 1 à 10% en poids par rapport au poids de la composition adhésive.

La composition adhésive selon l'invention peut comprendre au moins une résine tackifiante.

A titre d'exemple de résine(s) tackifiante(s) utilisable(s), on peut citer n'importe quelle résine tackifiante habituellement utilisée dans le domaine des compositions adhésives.

De préférence, on utilise celles possédant une masse molaire moyenne en poids (M_{w}) allant de 200 et 5000 et de préférence choisies parmi :
- (i) des colophanes d'origine naturelle ou chimiquement modifiées, telles que par exemple la colophane extraite de la gomme de pins, la colophane de bois extraite des racines de l'arbre et leurs dérivés hydrogénés, dimérisés, polymérisés ou estérifiés par des monoalcools ou des polyols comme le glycérol, le pentaérythritol ou le néopentylglycol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

La résine tackifiante est choisie de manière à être compatible avec le polyuréthane à terminaisons NCO utilisé selon l'invention, c'est-à-dire de manière à ce que lorsqu'elle est mélangée dans les proportions 50 % en poids /50 % en poids avec ledit polyuréthane à terminaisons NCO, cela donne un mélange substantiellement homogène. En particulier, le mélange reste transparent (dans le spectre de la lumière visible - longueur d'onde allant de 380 à 780 nanomètre, mesuré dans le vide) et aucun(e) déphasage ou gélification totale ou partielle n'est observé(e) dans le mélange polyuréthane/résine.

La quantité totale de résine(s) tackifiante(s) pouvant être utilisée est de préférence inférieure ou égale à 50% en poids du poids de la composition adhésive. Elle peut notamment varier de 1 à 50% en poids, et de préférence de 39 à 50% en poids par rapport au poids de la composition adhésive.

De préférence, la composition adhésive ne comprend pas de solvant organique de point d'ébullition inférieur à 250°C à pression atmosphérique, tel que de l'acétate d'éthyle, le xylène, le toluène, la N-méthyl-2-pyrrolidone (NMP).

La composition adhésive selon l'invention peut comprendre au moins un adjuvant choisi parmi les promoteurs d'adhérence tels que les époxysilanes, les stabilisants UV (ou anti-oxydants), les pigments, les colorants, et leur mélange. Lorsque ces adjuvants sont présents dans la composition, la somme totale de leur teneur est de préférence inférieure ou égale à 10% en poids par rapport au poids total de la composition adhésive.

La composition adhésive selon l'invention peut ainsi comprendre :
- au moins 50% en poids d'une composition de polyuréthane selon l'invention,
- de 0 à 1% en poids, de préférence de 0,01 à 1% en poids d'au moins un catalyseur de réticulation,
- de 0 à 20% en poids d'au moins une charge,
- de 0 à 20% en poids d'au moins un agent plastifiant,
- de 0 à 10% en poids d'au moins un agent de rhéologie,
- de 0 à 50% en poids d'au moins une résine tackifiante,
- de 0 à 10% en poids d'au moins un adjuvant choisi parmi les promoteurs d'adhérence, les stabilisants UV (ou anti-oxydants), les pigments, les colorants, et leur mélange, lesdits pourcentages en poids étant exprimés par rapport au poids total de la composition adhésive.

Les compositions adhésives selon l'invention sont formulées de manière à être utilisables ou applicables à basse température (entre 5 et 35°C) et notamment à température ambiante (23°C).

La présente invention a pour objet en troisième lieu un procédé de préparation d'une composition selon l'invention, stable dans le temps en terme de viscosité, comprenant une étape dans laquelle le(s) composé(s) (A), et le(s) autre(s) ingrédient(s) éventuellement présent(s) dans la composition selon l'invention, est (sont) mélangé(s) à une composition de polyuréthane(s) à terminaisons NCO à base de 2,4-TDI présentant une viscosité mesurée à 23°C inférieure ou égale à 150 000 mPa.s. et ayant une teneur en TDI inférieure à 0,1% en poids par rapport au poids de ladite composition, à une température inférieure ou égale à 95°C, de préférence à une température inférieure ou égale à 85°C, et mieux encore inférieure ou égale à 80°C.

L'ajout et le mélange se font dans des conditions anhydres.

Le(s) composé(s) (A) utilisé(s) selon l'invention peu(ven)t être ajouté(s) sur le(s) polyuréthane(s) à base de 2,4-TDI à terminaisons NCO présentant une viscosité mesurée à 23°C inférieure ou égale à 150 000 mPa.s. dans la composition selon l'invention, soit directement après la fin de la réaction de synthèse dudit (desdits) polyuréthane(s), soit après que l'un, plusieurs, ou tous les autres ingrédients optionnels de la composition de l'invention, tels que décrits précédemment, ont été mélangés au(x)dit(s) polyuréthane(s).

Lorsque l'ajout du (des) composé(s) (A) se fait directement après la fin de la réaction de synthèse dudit (desdits) polyuréthane(s), cet ajout se fait de préférence à chaud pour une meilleure homogénéité du mélange, à une température variant dans les gammes de température de synthèse dudit (desdits) polyuréthane(s) décrites plus haut. En particulier, l'ajout du (des) composé(s) (A) peut par exemple avoir lieu à une température allant de 65 à 85°C.

Lorsque l'ajout du (des) composé(s) (A) se fait ultérieurement, après ajout d'un ou plusieurs ingrédients optionnels de la composition selon l'invention, tels que décrits précédemment, cet ajout peut se faire à chaud, sous réserve de ne pas dégrader thermiquement le ou les ingrédients optionnels préalablement ajoutés, ou à une température plus basse pour éviter une telle dégradation thermique. En particulier, l'ajout du (des) composé(s) (A) peut par exemple avoir lieu à température ambiante.

L'exemple suivant est donné à titre purement illustratif de l'invention et ne saurait être interprété pour en limiter la portée.

### Exemples :

Les compositions de polyuréthane des exemples 1 et 2 ont été préparées par mélange des ingrédients indiqués dans le tableau 1 selon le protocole expérimental décrit ci-dessous.

Les quantités indiquées dans le tableau 1 sont exprimées en grammes

**Tableau 1**

| Ingrédients | 1 | 2 |
|---|---|---|
| PPG triol (M = 3400 g/mol) | 88,7 | 88,7 |
| TDI à 99% en poids de 2,4-TDI (%NCO = 48,1 % en poids) | 11,3 | 11,3 |
| XDI (%NCO = 44,7% en poids) | - | 0,3 |
| Rapport NCO/OH, r1 | 1,7 | 1,7 |

### Préparation de la composition de polyuréthane de l'exemple 1 :

Dans un réacteur placé sous atmosphère d'azote, sont ajoutés successivement le polyol et le diisocyanate. Ce mélange est maintenu sous agitation constante à 78 °C, sous azote, jusqu'à réaction complète des fonctions NCO du diisocyanate.

Le suivi de la réaction est réalisé en mesurant l'évolution de la teneur en groupes NCO dans le mélange, par exemple par un dosage de dibutylamine en retour, à l'aide d'acide chlorhydrique selon la norme NF T52-132.

Au bout de 3 heures, la réaction de synthèse est terminée. Le mélange est encore agité à la même température pendant 2 heures, avant d'être laissé à refroidir à température ambiante. La composition de polyuréthane obtenue est ensuite transvasée pour stockage et caractérisation, comme décrit plus bas.

### Préparation de la composition de polyuréthane de l'exemple 2:

Dans un réacteur placé sous atmosphère d'azote, sont ajoutés successivement le polyol et le diisocyanate. Ce mélange est maintenu sous agitation constante à 78 °C, sous azote, jusqu'à réaction complète des fonctions NCO du diisocyanate.

Le suivi de la réaction est réalisé en mesurant l'évolution de la teneur en groupes NCO dans le mélange, par exemple par un dosage de dibutylamine en retour, à l'aide d'acide chlorhydrique selon la norme NF T52-132.

Au bout de 3 heures, la réaction de synthèse est terminée. Le XDI est ajouté au mélange. L'agitation se poursuit encore pendant 2 heures à 78°C, avant d'être laissé à refroidir à température ambiante. La composition de polyuréthane obtenue est ensuite transvasée pour stockage et caractérisation, comme décrit plus bas.

### Caractérisation :

Pour chacune des compositions de polyuréthane des exemples 1 et 2 obtenues :
- La viscosité de la composition de polyuréthane est mesurée respectivement en fin de réaction (J+0), 7 jours après la fin de la réaction (J+7), puis 28 jours après la fin de la réaction (J+28), puis 56 jours après la fin de la réaction (J+56), puis 113 jours après la fin de la réaction (J+113) à 23°C dans des conditions de stockage anhydres.

La mesure de viscosité est réalisée à 23°C à l'aide d'un viscosimètre Brookfield RVT, avec une aiguille numéro 6 à une vitesse de rotation de 20 tours par minute (tr/mn). La valeur mesurée est exprimée en millipascal seconde (mPa.s).
- La teneur pondérale en monomère diisocyanate non réagi présent dans le milieu de synthèse du polyuréthane est mesurée par une méthode d'HPLC muni d'un détecteur UV tel que décrit précédemment (phase inversée en C18, phase mobile : solution aqueuse d'acétonitrile, tamponnée avec une solution aqueuse à 0,2% en poids de bisulfate de tétrabutylammonium à pH égal à 2,5, longueur d'onde de détection : 254nm). Les valeurs mesurées sont exprimées en pourcentage en poids par rapport au poids de la composition de chacun des exemples 1 et 2.

Les résultats de ces mesures sont consignés dans le tableau 2.

**Tableau 2**

| Caractérisation | 1 | 2 |
|---|---|---|
| Teneur en TDI résiduel mesurée | <0,1 | <0,1 |
| (en % en poids du poids de la composition de polyuréthane) | | |
| Viscosité à 23°C (mPa.s) (J+0) | 10420 | 10800 |
| Viscosité à 23°C (mPa.s) (J+7) | 18800 | 15140 |
| Viscosité à 23°C (mPa.s) (J+28) | 64500 | 20650 |
| Viscosité à 23°C (mPa.s) (J+56) | 197000 | 31350 |
| Viscosité à 23°C (mPa.s) (J+113) | 430000 | 46000 |

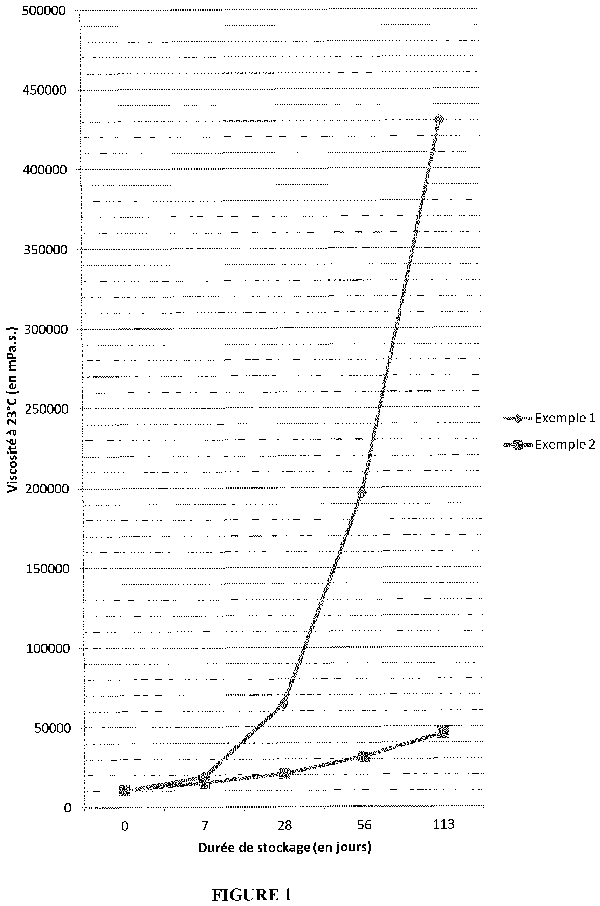

On observe qu'au bout de 28 jours de stockage dans des conditions identiques, la composition de l'exemple 2 selon l'invention présente une réduction de viscosité significative par rapport à la viscosité mesurée sur la composition de polyuréthane de l'exemple 1 non stabilisée. En outre, l'augmentation de la viscosité de la composition de l'exemple 2 est inférieure à celle de la composition de l'exemple 1, comme le montre la figure 1.

Par ailleurs, la comparaison des compositions de polyuréthane des exemples 1 et 2 dans les mêmes conditions de test a montré que les propriétés mécaniques, adhésives et/ou applicatives de la composition de polyuréthane de l'exemple 1 n'ont pas été dégradées par ajout du XDI. Les performances de la composition de l'exemple 2 sont donc au moins égales à celles que la composition de l'exemple 1.

## Revendications

1. Composition de polyuréthane comprenant :
a) au moins 98% en poids d'au moins un polyuréthane à terminaisons NCO à base de 2,4-toluène diisocyanate (2,4-TDI), présentant une viscosité mesurée à 23°C inférieure ou égale à 150 000 mPa.s,
b) une teneur en monomère TDI, issu de la synthèse dudit polyuréthane a), inférieure à 0,1% en poids,
c) au moins un composé isocyanate de volume molaire inférieur ou égal à 300 millilitres par mol (mL/mol) (noté composé A), choisi(s) parmi ceux dont le(s) groupe(s) isocyanate n'est (ne sont) pas relié(s) à un atome de carbone d'un cycle hydrocarboné aromatique,
le volume molaire étant mesuré à une température allant de 20 à 25°C et à pression atmosphérique de 1 bar,
les pourcentages en poids étant exprimés par rapport au poids total de ladite composition,
la viscosité étant mesurée à l'aide d'un viscosimètre Brookfield selon la norme ISO 2555.

2. Composition selon la revendication 1, **caractérisée en ce que** le(s) composé(s) (A) est (sont) choisi(s) parmi les monoisocyanates et les diisocyanates.

3. Composition selon la revendication 1 ou 2, **caractérisée** en ce le composé (A) est le XDI.

4. Composition selon l'une quelconque des revendications 1 à 3, **caractérisée en ce qu'**elle comprend une teneur totale en composé(s) (A) non nulle et inférieure à 0,5% en poids par rapport au poids de ladite composition.

5. Composition selon l'une quelconque des revendications 1 à 4, **caractérisée en ce que** le(s) polyuréthane(s) à terminaisons NCO à base de 2,4-TDI présentant une viscosité mesurée à 23°C inférieure ou égale à 150 000 mPa.s, est (sont) susceptible(s) d'être obtenu(s) par une réaction de polyaddition d'une composition de polyisocyanate(s) constituée de TDI à 95% en poids au moins de 2,4-TDI par rapport au poids de TDI, et d'une composition constituée de polyol(s), à une température inférieure à 95°C, dans des conditions anhydres, dans des quantités de polyisocyanate(s) et de polyol(s) conduisant à un rapport NCO/OH noté r1 allant de 1,60 à 1,90.

6. Composition selon la revendication 5, **caractérisée en ce que** la température va de 70 à 80°C et le rapport NCO/OH noté r1 va de 1,65 à 1,80.

7. Composition selon la revendication 5 ou 6, **caractérisée en ce que** la composition constituée de polyol(s) comprend au moins un polyéther polyol.

8. Composition adhésive **caractérisée en ce qu'**elle comprend :
- au moins 50% en poids d'une composition de polyuréthane telle que définie dans l'une quelconque des revendications 1 à 7,
- de 0 à 1% en poids d'au moins un catalyseur de réticulation,
- de 0 à 20% en poids d'au moins une charge,
- de 0 à 20% en poids d'au moins un agent plastifiant,
- de 0 à 10% en poids d'au moins un agent de rhéologie,
- de 0 à 50% en poids d'au moins une résine tackifiante,
- de 0 à 10% en poids d'au moins un adjuvant choisi parmi les promoteurs d'adhérence, les stabilisants UV (ou anti-oxydants), les pigments, les colorants, et leur mélange, lesdits pourcentages en poids étant exprimés par rapport au poids total de la composition adhésive.

9. Procédé de préparation d'une composition telle que définie dans l'une quelconque des revendications 1 à 7 ou 8, comprenant une étape dans laquelle le(s) composé(s) (A) tel que défini dans l'une des revendications 1 à 4, et le(s) autre(s) ingrédient(s) éventuellement présent(s) dans ladite composition, est (sont) mélangé(s) à une composition de polyuréthane(s) comprenant au moins un polyuréthane à terminaisons NCO à base de 2,4-TDI présentant une viscosité mesurée à 23°C inférieure ou égale à 150 000 mPa.s, et une teneur en TDI inférieure à 0,1% en poids par rapport au poids de ladite composition de polyuréthane(s), à une température inférieure ou égale à 95°C, dans des conditions anhydres en post-synthèse dudit polyuréthane à base de 2,4-TDI à terminaisons NCO,
la viscosité étant mesurée à l'aide d'un viscosimètre Brookfield selon la norme ISO 2555.

10. Procédé de préparation selon la revendication 9 d'une composition telle que définie dans la revendication 1 à 7 ou 8, **caractérisé en ce que** le(s) composé(s) (A) est (sont) mélangé(s) à ladite composition :
- soit directement après la fin de la réaction de synthèse du polyuréthane à terminaisons NCO à base de 2,4-TDI tel que défini dans la revendication 9,
- soit après que l'un, plusieurs, ou tous les autres ingrédients de la composition telle que définie dans la revendication 8 ont été mélangés au polyuréthane à terminaisons NCO à base de 2,4-TDI tel que défini dans la revendication 9.

11. Utilisation d'au moins un composé isocyanate (A) tel que défini dans l'une des revendications 1 à 4 comme agent stabilisant de viscosité d'une composition comprenant au moins un polyuréthane à terminaisons NCO à base de 2,4-TDI présentant une viscosité mesurée à 23°C inférieure ou égale à 150 000 mPa.s, et une teneur en TDI, issu de la synthèse dudit polyuréthane, inférieure à 0,1% en poids par rapport au poids de ladite composition,
la viscosité étant mesurée à l'aide d'un viscosimètre Brookfield selon la norme ISO 2555.

## Patentansprüche

1. Polyurethanzusammensetzung, umfassend:
a) mindestens 98 Gew.-% mindestens eines Polyurethans mit NCO-Endgruppen auf der Basis von 2,4-Toluoldiisocyanat (2,4-TDI) mit einer bei 23 °C gemessenen Viskosität kleiner oder gleich 150.000 mPa.s,
b) einen Gehalt an TDI-Monomer, das aus der Synthese des Polyurethans a) stammt, von weniger als 0,1 Gew.-%,
c) mindestens eine Isocyanatverbindung mit einem molaren Volumen kleiner oder gleich 300 Milliliter pro Mol (ml/mol) (als Verbindung A bezeichnet), ausgewählt aus denjenigen Verbindungen, deren Isocyanatgruppe bzw. Isocyanatgruppen nicht an ein Kohlenstoffatom eines aromatischen Kohlenwasserstoffrings gebunden ist bzw. sind,
wobei das molare Volumen bei einer Temperatur im Bereich von 20 bis 25 °C und bei Normaldruck von 1 bar gemessen wird,
wobei sich die Gewichtsprozentangaben auf das Gesamtgewicht der Zusammensetzung beziehen,
wobei die Viskosität mit Hilfe eines Brookfield-Viskosimeters gemäß ISO-Norm 2555 gemessen wird.

2. Zusammensetzung nach Anspruch 1, **dadurch gekennzeichnet, dass** die Verbindung bzw. die Verbindungen (A) aus Monoisocyanaten und Diisocyanaten ausgewählt ist bzw. sind.

3. Zusammensetzung nach Anspruch 1 oder 2, **dadurch gekennzeichnet, dass** es sich bei der Verbindung (A) um XDI handelt.

4. Zusammensetzung nach einem der Ansprüche 1 bis 3, **dadurch gekennzeichnet, dass** sie einen Gesamtgehalt an Verbindung bzw. Verbindungen (A) aufweist, der ungleich null und kleiner 0,5 Gew.-%, bezogen auf das Gewicht der Zusammensetzung, ist.

5. Zusammensetzung nach einem der Ansprüche 1 bis 4, **dadurch gekennzeichnet, dass** das Polyurethan bzw. die Polyurethane mit NCO-Endgruppen auf Basis von 2,4-TDI mit einer bei 23 °C gemessenen Viskosität kleiner oder gleich 150.000 mPa.s durch eine Polyadditionsreaktion einer aus TDI mit mindestens 95 Gew.-% 2,4-TDI, bezogen auf das Gewicht des TDI, bestehenden Polyisocyanatzusammensetzung und einer aus Polyol(en) bestehenden Zusammensetzung bei einer Temperatur von weniger als 95 °C unter wasserfreien Bedingungen erhältlich ist bzw. sind, wobei die Mengen von Polyisocyanat(en) und Polyol(en) zu einem als r1 bezeichneten NCO/OH-Verhältnis im Bereich von 1,60 bis 1,90 führen.

6. Zusammensetzung nach Anspruch 5, **dadurch gekennzeichnet, dass** die Temperatur im Bereich von 70 bis 80 °C liegt und das als r1 bezeichnete NCO/OH-Verhältnis im Bereich von 1,65 bis 1,80 liegt.

7. Zusammensetzung nach Anspruch 5 oder 6, **dadurch gekennzeichnet, dass** die aus Polyol(en) bestehende Zusammensetzung mindestens ein Polyetherpolyol umfasst.

8. Klebstoffzusammensetzung, **dadurch gekennzeichnet, dass** sie Folgendes umfasst:
- mindestens 50 Gew.-% einer Polyurethanzusammensetzung gemäß einem der Ansprüche 1 bis 7,
- 0 bis 1 Gew.-% mindestens eines Vernetzungskatalysators,
- 0 bis 20 Gew.-% mindestens eines Wirkstoffs,
- 0 bis 20 Gew.-% mindestens eines Weichmachers,
- 0 bis 10 Gew.-% mindestens eines Rheologiemittels,
- 0 bis 50 Gew.-% mindestens eines Klebrigmacherharzes,
- 0 bis 10 Gew.-% mindestens eines Hilfsstoffs, der aus Haftvermittlern, UV-Stabilisatoren (oder Antioxidantien), Pigmenten, Farbmitteln und einer Mischung davon ausgewählt ist, wobei sich die Gewichtsprozentangaben auf das Gesamtgewicht der Klebstoffzusammensetzung beziehen.

9. Verfahren zur Herstellung einer Zusammensetzung gemäß einem der Ansprüche 1 bis 7 oder 8, umfassend einen Schritt, der das Mischen der Verbindung bzw. der Verbindungen (A) gemäß einem der Ansprüche 1 bis 4 und des anderen Bestandteils bzw. der anderen Bestandteile, der bzw. die gegebenenfalls in der Zusammensetzung vorhanden ist bzw. sind, mit einer Polyurethanzusammensetzung, umfassend mindestens ein Polyurethan mit NCO-Endgruppen auf der Basis von 2,4-TDI mit einer bei 23 °C gemessenen Viskosität kleiner oder gleich 150.000 mPa.s und einem TDI-Gehalt von weniger als 0,1 Gew.-%, bezogen auf das Gewicht der Polyurethanzusammensetzung, nach der Synthese des Polyurethans auf der Basis von 2,4-TDI mit NCO-Endgruppen bei einer Temperatur kleiner oder gleich 95 °C unter wasserfreien Bedingungen umfasst, wobei die Viskosität mit Hilfe eines Brookfield-Viskosimeters gemäß ISO-Norm 2555 gemessen wird.

10. Herstellungsverfahren nach Anspruch 9 für eine Zusammensetzung gemäß Anspruch 1 bis 7 oder 8, **dadurch gekennzeichnet, dass** das Mischen der Verbindung bzw. der Verbindungen (A) mit der Zusammensetzung
- entweder direkt nach dem Ende der Umsetzung zur Synthese des Polyurethans mit NCO-Endgruppen auf der Basis von 2,4-TDI gemäß Anspruch 9
- oder nach dem Mischen eines, mehrerer oder aller anderen Bestandteile der Zusammensetzung gemäß Anspruch 8 mit dem Polyurethan mit NCO-Endgruppen auf der Basis von 2,4-TDI gemäß Anspruch 9 erfolgt.

11. Verwendung mindestens einer Isocyanatverbindung (A) gemäß einem der Ansprüche 1 bis 4 als Mittel zur Stabilisierung der Viskosität einer Zusammensetzung, umfassend mindestens ein Polyurethan mit NCO-Endgruppen auf der Basis von 2,4-TDI mit einer bei 23 °C gemessenen Viskosität kleiner oder gleich 150.000 mPa.s und einem Gehalt an TDI-Monomer, das aus der Synthese des Polyurethans stammt, von weniger als 0,1 Gew.-%, bezogen auf das Gewicht der Zusammensetzung,
wobei die Viskosität mit Hilfe eines Brookfield-Viskosimeters gemäß ISO-Norm 2555 gemessen wird.

## Claims

1. Polyurethane composition comprising:
a) at least 98% by weight of at least one polyurethane bearing NCO end groups based on 2,4-toluene diisocyanate (2,4-TDI), having a viscosity measured at 23°C of less than or equal to 150 000 mPa.s,
b) a content of TDI monomer, derived from the synthesis of said polyurethane a), of less than 0.1% by weight,
c) at least one isocyanate compound with a molar volume of less than or equal to 300 millilitres per mole (mL/mol) (noted compound A), chosen from those in which the isocyanate group (s) are not linked to a carbon atom of an aromatic hydrocarbon-based ring,
the molar volume being measured at a temperature ranging from 20 to 25°C and at atmospheric pressure of 1 bar,
the weight percentages being expressed relative to the total weight of said composition,
the viscosity being measured using a Brookfield viscometer according to the standard ISO 2555.

2. Composition according to Claim 1, **characterized in that** the compound(s) (A) are chosen from monoisocyanates and diisocyanates.

3. Composition according to Claim 1 or 2, **characterized in that** compound (A) is XDI.

4. Composition according to any one of Claims 1 to 3, **characterized in that** it comprises a total content of compound(s) (A) which is non-zero and less than 0.5% by weight relative to the weight of said composition.

5. Composition according to any one of Claims 1 to 4, **characterized in that** the polyurethane(s) bearing NCO end groups based on 2,4-TDI having a viscosity measured at 23°C of less than or equal to 150 000 mPa.s may be obtained via a polyaddition reaction of a polyisocyanate composition consisting of TDI at 95% by weight at least of 2,4-TDI relative to the weight of TDI, and of a composition consisting of polyol(s), at a temperature of less than 95°C, under anhydrous conditions, in amounts of polyisocyanate(s) and of polyol(s) leading to an NCO/OH ratio noted r1 ranging from 1.60 to 1.90.

6. Composition according to Claim 5, **characterized in that** the temperature ranges from 70 to 80°C and the NCO/OH ratio noted r1 ranges from 1.65 to 1.80.

7. Composition according to Claim 5 or 6, **characterized in that** the composition consisting of polyol(s) comprises at least one polyether polyol.

8. Adhesive composition, **characterized in that** it comprises:
- at least 50% by weight of a polyurethane composition as defined in any one of Claims 1 to 7,
- from 0 to 1% by weight of at least one crosslinking catalyst,
- from 0 to 20% by weight of at least one filler,
- from 0 to 20% by weight of at least one plasticizer,
- from 0 to 10% by weight of at least one rheology agent,
- from 0 to 50% by weight of at least one tackifying resin,
- from 0 to 10% by weight of at least one adjuvant chosen from adhesion promoters, UV stabilizers (or antioxidants), pigments, colorants, and a mixture thereof, said weight percentages being expressed relative to the total weight of the adhesive composition.

9. Process for preparing a composition as defined in any one of Claims 1 to 7 or 8, comprising a step in which the compound(s) (A) as defined in one of Claims 1 to 4, and the other ingredient(s) optionally present in said composition, are mixed with a polyurethane composition comprising at least one polyurethane bearing NCO end groups based on 2,4-TDI having a viscosity measured at 23°C of less than or equal to 150 000 mPa.s, and a TDI content of less than 0.1% by weight relative to the weight of said polyurethane composition, at a temperature of less than or equal to 95°C, under anhydrous conditions in post-synthesis of said polyurethane based on 2,4-TDI bearing NCO end groups,
the viscosity being measured using a Brookfield viscometer according to the standard ISO 2555.

10. Process according to Claim 9 for preparing a composition as defined in Claim 1 to 7 or 8, **characterized in that** the compound(s) (A) are mixed with said composition:
- either directly after the end of the reaction for the synthesis of the polyurethane bearing NCO end groups based on 2,4-TDI as defined in Claim 9,
- or after one, several or all of the other ingredients of the composition as defined in Claim 8 have been mixed with the polyurethane bearing NCO end groups based on 2,4-TDI as defined in Claim 9.

11. Use of at least one isocyanate compound (A) as defined in any one of Claims 1 to 4 as an agent for stabilizing the viscosity of a composition comprising at least one polyurethane bearing NCO end groups based on 2,4-TDI having a viscosity measured at 23°C of less than or equal to 150 000 mPa.s, and a content of TDI, derived from the synthesis of said polyurethane, of less than 0.1% by weight relative to the weight of said composition,
the viscosity being measured using a Brookfield viscometer according to the standard ISO 2555.
